# EUROPÄISCHE PATENTSCHRIFT

(11) **EP 0 380 961 B1**
(45) Veröffentlichungstag und Bekanntmachung des Hinweises auf die Patenterteilung: **29.12.1993**
(21) Anmeldenummer: 90100895.3
(22) Anmeldetag: 17.01.1990
(51) Int. Cl.: B61D 3/10, B61D 17/20, B62D 47/02

(54) **Gelenkige Verbindung von Wagenkästen eines Fahrzeuges, insbesondere eines Schienenfahrzeuges**
Articulated linkage between the bodies of a vehicle, especially a railway vehicle
Liaison articulée de caisses d'un véhicule, notamment ferroviaire

(30) Priorität: 01.02.1989 DE 3902924
(43) Veröffentlichungstag der Anmeldung: 08.08.1990
(73) Patentinhaber: DUEWAG AKTIENGESELLSCHAFT, 47829 Krefeld (DE)
(72) Erfinder: Giesen, Ulrich, D-4150 Krefeld 1 (DE); Schmeisser, Wolfgang, D-4010 Hilden (DE); Bender, Joachim, D-5600 Wuppertal 1 (DE)

(56) Entgegenhaltungen:
- EP-A- 0 032 079
- DE-B- 1 051 892
- US-A- 4 781 123

## Beschreibung

Die Erfindung betrifft eine gelenkige Verbindung von Wagenkästen eines Fahrzeuges, insbesondere eines Schienenfahrzeuges, mit Hilfe eines Rollkranzes, der an einem über das Ende eines der beiden Wagenkästen hinausragenden Stützträger gehalten ist und mit Verbindungsarmen des anderen Wagenkastens gelenkig zusammenwirkt, wobei die Trennfuge zwischen den Wagenkästen durch einen umlaufenden Balg dicht verschlossen ist.

Eine gelenkige Verbindung mit den vorgenannten Merkmalen ist bei einer Vielzahl von Schienenfahrzeugen, speziell bei Straßenbahn- und Stadtbahnwagen, verwirklicht worden und gehört deshalb zum Stand der Technik. Der Rollkranz kann aus einem inneren Ring und einem äußeren Ring und zwischen diesen angeordneten Wälzkörpern gebildet sein. Dabei ruht der innere Ring auf dem Stützträger des einen Wagenkastens. Unterhalb des Stützträgers befindet sich der horizontale Abschnitt des umlaufenden Balges. Insoweit hat die Verbindung in ihrem Bodenbereich eine Gesamthöhe, die der Summe der jeweiligen Bauhöhen von Rollkranz, Stützträger und Dichtungsbalg enspricht. Zwischen der Unterseite des Balges und dem Niveau der Schienenoberkante muß so viel Abstand bestehen, daß eine Berührung des Balges mit der Schiene ausgeschlossen ist. Bei der Bemessung dieses Abstandes sind die maximale Einfederung des beladenen Fahrzeuges, der zulässige Verschleiß der Räder und die notwendige Luft zu berücksichtigen. Die Gesamthöhe der Gelenkverbindung im Bodenbereich und der besagte Abstand zwischen Balg und Schiene definieren eine entsprechende Fußbodenhöhe des Fahrzeuges, die nicht ohne weiteres unterschritten werden kann.

Der Erfindung liegt die Aufgabe zugrunde, eine gelenkige Verbindung der gattungsgemäßen Art so zu gestalten, daß ein Fahrzeug mit besonders tiefliegendem, günstige Ein- und Ausstiegsverhältnisse bietendem Fußboden geschaffen und dabei ein für alle Betriebsbedingungen ausreichender Abstand zwischen dem Dichtungsbalg und dem Schienenniveau eingehalten werden kann.

Diese Aufgabe wird erfindungsgemäß dadurch gelöst, daß der Stützträger über einen in Höhenebene des Rollkranzes angeordneten Trägerabschnitt in den vom Rollkranz umschlossenen Raum eingreift.

Nach einer bevorzugten Ausführungsform der Erfindung ist vorgesehen, daß der Rollkranz an seiner dem Stützträger zugewandten Seite C-förmig offen ausgebildet ist, wobei der Trägerabschnitt des Stützträgers die besagte Öffnung des Rollkranzes durchgreift.
In diesem Fall erstreckt sich der untere Abschnitt des Dichtungsbalges über die gesamte Breite der Trennfuge zwischen den beiden Wagenkästen.

Um Festigkeitseigenschaften zu erzielen, die mit denen eines geschlossenen Rollkranzes vergleichbar sind, besteht eine weitere Ausgestaltung der Erfindung darin, daß der einseitig offene Rollkranz eine Verstärkung aufweist, die einem Aufbiegen dieses Rollkranzes entgegenwirkt.

Gemäß einer ergänzenden Weiterbildung der Erfindung wird vorgeschlagen, daß die Verstärkung plattenförmig ausgebildet und lösbar mit dem äußeren Ring des Rollkranzes verbunden ist.

Eine andere grundsätzliche Ausführungsform der Erfindung besteht darin, daß der in den vom Rollkranz umschlossenen Raum eingreifende Trägerabschnitt der obere Teil des gekröpft ausgeführten Stützträgers ist, wobei der untere Abschnitt des gekröpften Stützträgers in Höhenebene des Balges liegt, mit dem unteren horizontalen Abschnitt des Balges verbunden ist und zusammen mit diesem die untere Abdichtung der Trennfuge zwischen den Wagenkästen bildet. Bei dieser Ausführung ist ein üblicher, rundum ringförmiger Rollkranz verwendbar. Weiter erstreckt sich hierbei der untere Abschnitt des Dichtungsbalges nur über den Teilbereich der Trennfuge zwischen den Wagenkästen, der nicht bereits durch den unteren Abschnitt des gekröpften Stützträgers abgedichtet ist.

Die mit dem Gegenstand nach der Erfindung erzielbaren Vorteile liegen insbesondere darin, daß die Bauhöhe des in den Rollkranz integrierten Stützträgers bei der Festlegung der Fußbodenhöhe des Fahrzeuges keine Rolle mehr spielt. Dadurch kann ein besonders niedriger Fußboden bei zugleich genügendem Abstand zwischen der Unterseite des Dichtungsbalges und dem Schienenniveau verwirklicht werden.

Ausführungsbeispiele der Erfindung sind in der Zeichnung prinzipartig dargestellt und werden im folgenden näher beschrieben. Es zeigen
- Fig. 1: den Gelenkbereich eines Schienenfahrzeuges mit einer ersten erfindungsgemäßen Gelenkverbindung, in Draufsicht,
- Fig. 2: den Schnitt nach der Linie II - II in Fig. 1,
- Fig. 3: den Schnitt nach der Linie III - III in Fig. 1,
- Fig. 4: den Gelenkbereich eines Schienenfahrzeuges mit einer zweiten erfindungsgemäßen Gelenkverbindung, gleichfalls in Draufsicht,
- Fig. 5: den Schnitt nach der Linie V - V in Fig. 3,
- Fig. 6: den Schnitt nach der Linie VI - VI in Fig. 3.

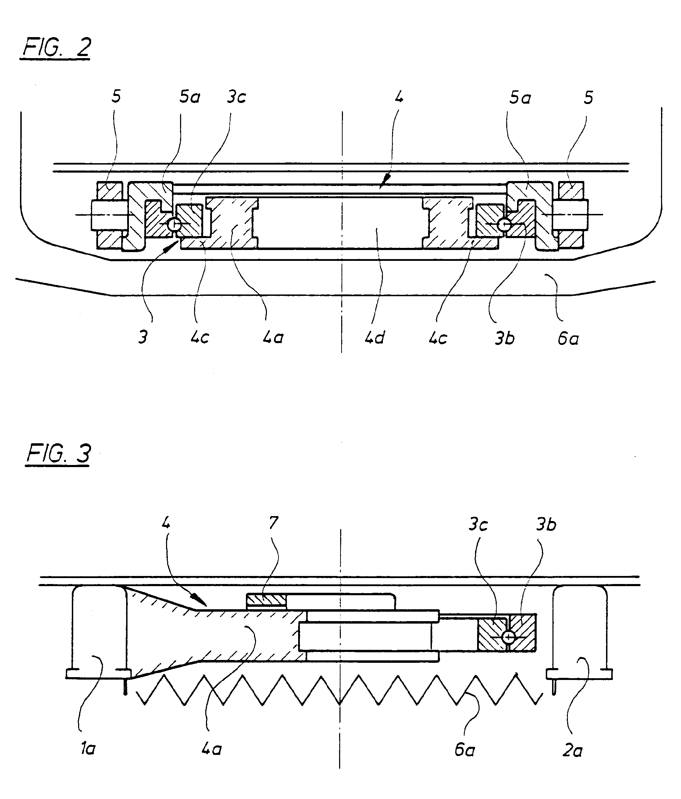

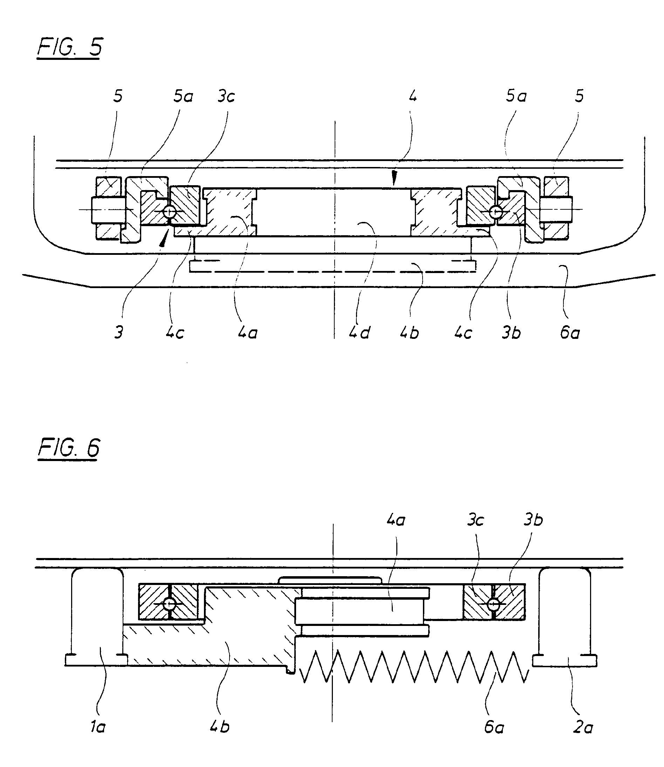

Beide Gelenkverbindungen enthalten einen Rollkranz 3, der einen inneren Ring 3c und einen äußeren Ring 3b aufweist. Der Rollkranz 3 liegt im Bereich zwischen zwei Endträgern 1a und 2a von Wagenkästen 1 bzw. 2. Ein am Endträger 1a angebrachter Stützträger 4 hat untere Flansche 4c - siehe insbesondere Fig. 2 und 5 -, an denen der innere Ring 3c des Rollkranzes 3 gehalten ist. Der äußere Ring 3b wirkt mit Verbindungsarmen 5 gelenkig zusammen, die jeweils am Endträger 2a angeschweißt sind. Dabei dienen Verbindungsstücke 5a, die den äußeren Ring 3b umgreifen und daran angeschraubt sind, dem Anschluß der Verbindungsarme 5 am äußeren Ring 3b des Rollkranzes 3.

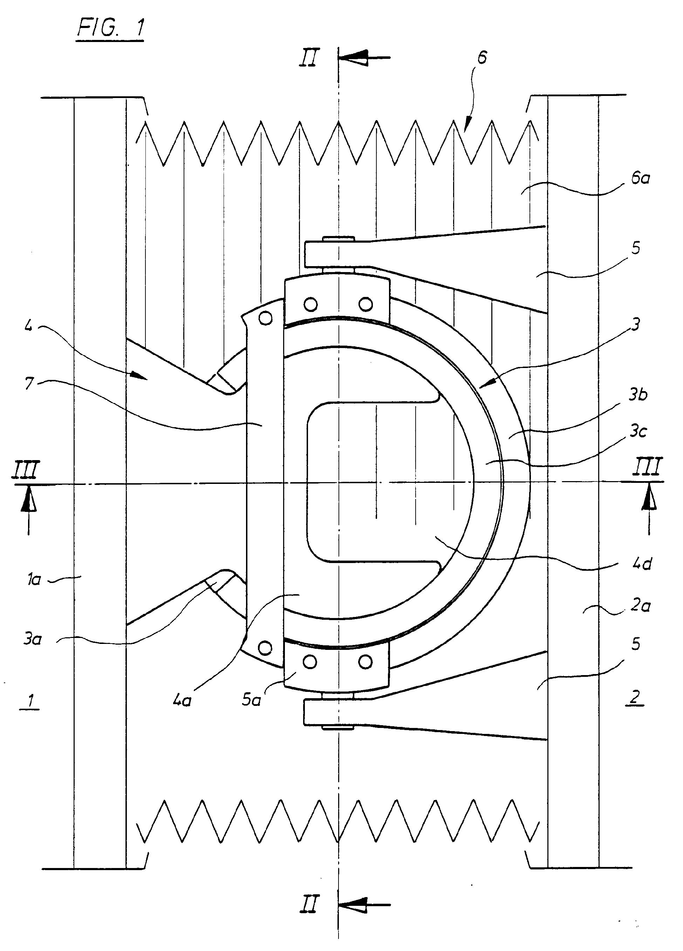

Wie aus Fig. 1 ersichtlich, ist der Rollkranz 3 an seiner dem Stützträger 4 zugewandten Seite C-förmig offen ausgebildet, wobei der Stützträger 4 über einen in Höhenebene des Rollkranzes 3 angeordneten Trägerabschnitt 4a die Öffnung 3a des Rollkranzes 3 durchgreift. Um Gewicht zu sparen, hat der innerhalb des Rollkranzes 3 liegende Trägerabschnitt 4a eine Ausnehmung 4d. Die Öffnung 3a des äußeren Rollkranz-Ringes 3b ist unter Berücksichtigung der maximalen Drehbewegungen der beiden Wagenkästen 1 und 2 größer als die des inneren Ringes 3c. Um ein Aufbiegen des Rollkranzes 3 zu verhindern, ist eine plattenförmige Verstärkung 7 lösbar mit dem äußeren Ring 3b verbunden.
Verstärkung 7 und äußerer Ring 3b können auch einstückig ausgebildet sein.

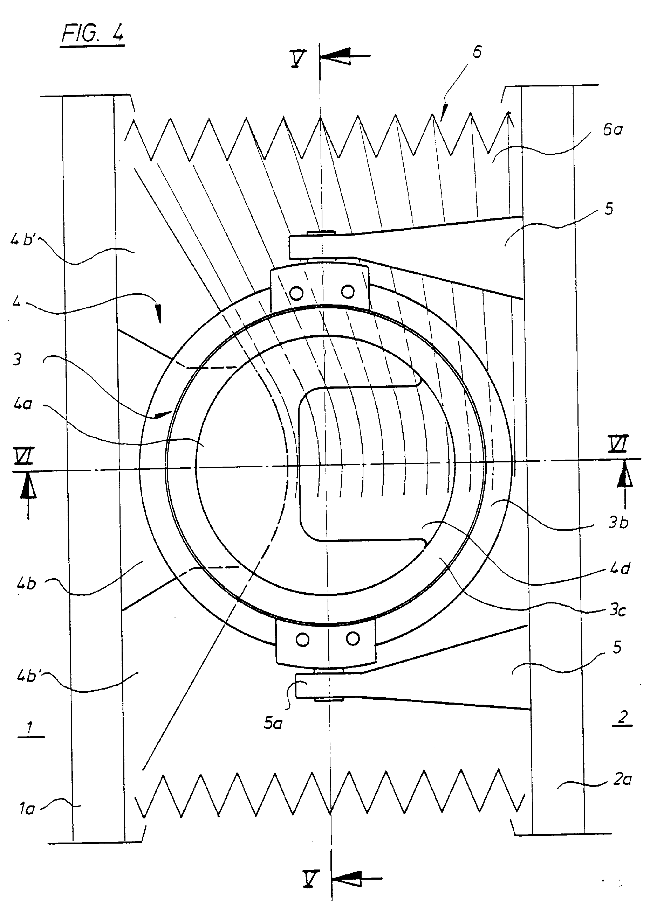

Bei der Gelenkverbindung gemäß Fig. 4 - 6 wird ein gekröpfter Stützträger 4 verwendet. Der obere, wiederum in Höhenebene des Rollkranzes 3 angeordnete und mit der Ausnehmung 4d versehene Trägerabschnitt 4a greift in den Raum ein, den der hier rundum ringförmige Rollkranz 3 umschließt. Der untere, mit seitlichen Ergänzungsblechen 4b' (Fig.1) versehene Abschnitt 4b des gekröpften Stützträgers 4 liegt in Höhenebene des unteren Balgabschnittes 6a und ist mit diesem verbunden. Auf diese Weise bilden dieser Abschnitt 4b und der Balgabschnitt 6a gemeinsam die untere Abdichtung der Trennfuge zwischen den Wasenkästen 1 und 2.

## Patentansprüche

1. Gelenkige Verbindung von Wagenkästen (1,2) eines Fahrzeuges, insbesondere eines Schienenfahrzeuges, mit Hilfe eines Rollkranzes (3), der an einem über das Ende eines der beiden Wagenkästen (1) hinausragenden Stützträger (4) gehalten ist und mit Verbindungsarmen (5) des anderen Wagenkastens (2) gelenkig zusammenwirkt, wobei die Trennfuge zwischen den Wagenkästen (1,2) durch einen umlaufenden Balg (6) dicht verschlossen ist, dadurch gekennzeichnet, daß der Stützträger (4) über einen in Höhenebene des Rollkranzes (3) angeordneten Trägerabschnitt (4a) in den vom Rollkranz (3) umschlossenen Raum eingreift.

2. Verbindung nach Anspruch 1, dadurch gekennzeichnet, daß der Rollkranz (3) an seiner dem Stützträger (4) zugewandten Seite C-förmig offen ausgebildet ist, wobei der Trägerabschnitt (4a) des Stützträgers (4) die besagte Öffnung (3a) des Rollkranzes (3) durchgreift.

3. Verbindung nach Anspruch 2, dadurch gekennzeichnet, daß der einseitig offene Rollkranz (3) eine Verstärkung (7) aufweist, die einem Aufbiegen dieses Rollkranzes (3) entgegenwirkt.

4. Verbindung nach Anspruch 3, dadurch gekennzeichnet, daß die Verstärkung (7) plattenförmig ausgebildet und lösbar mit dem äußeren Ring (3b) des Rollkranzes (3) verbunden ist.

5. Verbindung nach Anspruch 1, dadurch gekennzeichnet, daß der in den vom Rollkranz (3) umschlossenen Raum eingreifende Trägerabschnitt (4a) der obere Teil des gekröpft ausgeführten Stützträgers (4) ist, wobei der untere Abschnitt (4b) des gekröpften Stützträgers (4) in Höhenebene des Balges (6) liegt, mit dem unteren horizontalen Abschnitt (6a) des Balges (6) verbunden ist und zusammen mit diesem die untere Abdichtung der Trennfuge zwischen den Wagenkästen (1,2) bildet.

## Claims

1. An articulated coupling for vehicle wagons (1, 2), especially those of a railway vehicle, with a rolling collar (3) retained on a supporting carrier (4) projecting beyond the end of one of the two wagons (1), and the said collar co-operating in an articulated manner with coupling arms (5) on the other wagon (2), the dividing gap between the wagons (1, 2) being sealed by means of a surrounding bellows (6), **characterised in that** the supporting carrier (4) engages in the space - enclosed by the rolling collar (3) - by means of a portion of the carrier (4a) arranged at the vertical level of the rolling collar (3).

2. A coupling in accordance with claim 1, **characterised in that** the rolling collar (3) is formed so as to be open and C-shaped at its side facing the supporting carrier (4), the carrier portion (4a) of the supporting carrier (4) passing through the said opening (3a) in the rolling collar (3).

3. A coupling in accordance with claim 2, **characterised in that** the rolling collar (3), open at one side, has a reinforcement (7) counteracting upward bending of the said rolling collar (3).

4. A coupling in accordance with claim 3, **characterised in that** the reinforcement (7) is plate-shaped and detachably connected to the outer ring (3b) of the rolling collar (3).

5. A coupling in accordance with claim 1, **characterised in that** the carrier portion (4a), engaging in the space enclosed by the rolling collar (3), is the upper part of the cranked supporting carrier (4), the lower part (4b) of the cranked supporting carrier (4) being at the vertical level of the bellows (6) and connected to the lower horizontal portion (6a) of the bellows (6), and together therewith forming the lower seal for the dividing gap between the wagons (1, 2).

## Revendications

1. Liaison articulée de caisses (1, 2) de véhicule, notamment de véhicule ferroviaire, au moyen d'une couronne de roulement (3) qui est montée sur un support (4) faisant saillie de l'extrémité de l'une des deux caisses (1) et qui coopère de manière articulée avec des bras de liaison (5) de l'autre caisse (2), la fente de séparation entre les caisses (1, 2) étant fermée de manière hermétique par un soufflet circulaire (6), caractérisée en ce que le support (4) s'encastre dans l'espace entouré par la couronne de roulement (3) par l'intermédiaire d'une partie porteuse (4a) placée à la hauteur de la couronne de roulement (3).

2. Liaison selon la revendication 1, caractérisée en ce que la couronne de roulement (3) est réalisée en forme de C et ouverte sur son côté orienté vers le support (4), la partie porteuse (4a) du support (4) traversant ladite ouverture (3a) de la couronne de roulement (3).

3. Liaison selon la revendication 2, caractérisée en ce que la couronne de roulement (3) ouverte d'un côté présente un renforcement (7) qui réagit contre un écartement de cette couronne de roulement (3).

4. Liaison selon la revendication 3, caractérisée en ce que le renforcement (7) est réalisé en forme de plaque et est relié de manière amovible à l'anneau extérieur (3b) de la couronne de roulement (3).

5. Liaison selon la revendication 1, caractérisée en ce que la partie porteuse (4a) qui s'encastre dans l'espace entouré par la couronne de roulement (3) constitue la partie supérieure du support (4) contrecoudé, la partie inférieure (4b) du support (4) contrecoudé se situant à la hauteur du soufflet (6), étant reliée à la partie (6a) horizontale inférieure du soufflet (6) et formant avec cette dernière la garniture inférieure de la fente de séparation entre les caisses (1, 2).
